# EUROPEAN PATENT APPLICATION

(11) **EP 2 940 108 A1**
(43) Date of publication of application: **04.11.2015**
(21) Application number: 12891054.4
(22) Date of filing: 27.12.2012
(51) Int. Cl.: C10M 141/06, C10M 129/26, C10M 133/04

(54) **ROLLING BEARING AND GREASE COMPOSITION TO BE USED THEREIN**

(71) Applicant: NSK Ltd., Tokyo 141-8560 (JP); Kyodo Yushi Co., Ltd., Fujisawa-shi, Kanagawa 251-8588 (JP)
(72) Inventor: INAMI Noriyuki, Kanagawa (JP); KANDA Haruka, Kanagawa (JP); HOKAO Michita, Kanagawa (JP); YOKOUCHI Atsushi, Kanagawa (JP); NAKATANI Shinya, Kanagawa (JP)
(74) Representative: Grünecker Patent- und Rechtsanwälte PartG mbB
(86) International application number: PCT/JP2012/083981
(87) International publication number: WO 2014/102988

(57) **Abstract**

A rolling bearing in which multiple rolling elements are disposed between an inner ring and an outer ring in such a state that the rolling elements can roll and which is filled with a grease composition that is obtained by adding three kinds of rust preventives to a base oil consisting of at least one mineral or synthetic oil and exhibiting a kinematic viscosity of 200 to 400mm²/s at 40°C and that exhibits a cone penetration of 300 to 400 and a yield stress at 40°C of 150Pa or less, said three kinds of rust preventives being a carboxylic acid-based rust preventive, a carboxylic salt-based rust preventive and an amine-based rust preventive.

## Description

### Technical Field

The present invention relates to a rolling bearing used particularly in an environment where a large amount of water is likely to get mixed in, such as a rolling process in steel facilities, and a grease composition having water resistance which is enclosed in the rolling bearing.

### Background Art

In general, the humidity around a rolling mill of steel facilities such as steel plants is very high since the equipment and process involve jetting of a large amount of water for a rolling mill and the temperature is high. Therefore, water resistance is required in the grease enclosed for lubrication in a rolling bearing of a rolling mill.

Various water-resistant greases have been proposed to improve the water resistance. In Patent Document 1, water is dispersed in the grease by using a nonaqueous base oil or an additive to improve the water resistance. In Patent Document 2, a surface coat is formed from an additive to prevent intrusion of water into steel constituting the bearing and thereby improve the water resistance. In Patent Document 3, an organometallic compound and a sulfur-phosphorus-based antiwear agent are added to improve the durability and life of the bearing for a steel rolling mill.

However, as for the water-resistant grease disclosed in Patent Documents 1 to 3, the relationship between the fluidity, for example, the base oil viscosity, and the bearing life is not examined, and more studies on the physical properties are required to improve the life under water-mixed conditions. Moreover, in connection with the fluidity, there is a concern about occurrence of smearing. For prevention of smearing, Patent Document 4 discloses a technique of adjusting the penetration to a range of 300 to 400. However, only adjustment of the penetration is not sufficient.

### Prior Art Document

### Patent Document

Patent document 1: JP-A-2008-1864
Patent Document 2: JP-A-2010-24440
Patent Document 3: JP-A-2009-299846
Patent Document 4: JP-A-2012-153803

### Summary of the Invention

### Problem to be Solved by the Invention

The present invention has been made in view of the above circumstances, and an object of the present invention is to provide a rolling bearing in which a grease composition having excellent water resistance and excellent fluidity is enclosed to thereby prevent occurrence of smearing while improving the life under water-mixed conditions, and the grease composition.

### Means for Solving the Problem

In order to attain the above-described object, the present invention provides a rolling bearing and a grease composition which are described below.
(1) A grease composition for a rolling bearing, the grease composition obtained by adding three kinds of antirust agents which are a carboxylic acid-based antirust agent, a carboxylate-based antirust agent and an amine-based antirust agent to a base oil which contains at least one kind of a mineral oil and a synthetic oil and has a kinematic viscosity of 200 to 400 mm²/s at 40°C, the grease composition having a penetration of 300 to 400 and a yield stress of 150 Pa or less at 40°C.
(2) The grease composition for the rolling bearing according to (1) having an apparent viscosity is 1.5 Pa•s or less at 40°C and a shear velocity of 5,000 s⁻¹.
(3) A rolling bearing comprising a plurality of rolling elements rollably provided between an inner ring and an outer ring and having enclosed therein the grease composition according to (1) or (2).

### Effects of the Invention

In the rolling bearing of the present invention, due to three kinds of specific antirust agents added to the enclosed grease, even when water is mixed in, flaking attributable to hydrogen produced from water and corrosion due to water can be effectively suppressed. Therefore, even in an environment where the bearing is exposed to a large amount of water, such as rolling process, excellent water resistance can be obtained, and therefore, an excellent bearing function can be maintained over a long period of time. In addition, since the base oil has a specific viscosity, a sufficient oil film thickness can be ensured even when water gets mixed in. Further, since a penetration, a yield stress and an apparent viscosity are adjusted to specific ranges to increase the fluidity, smearing can be reduced and grease leakage can be prevented.

### Brief Description of the Drawings

Fig. 1 is a partial enlarged cross-sectional view showing a rolling bearing according to an embodiment of the present invention.
Fig. 2 is a schematic view showing a measurement part of a rheometer.

### Detailed Description of Embodiments

The present invention is described in detail below by referring to the drawings.

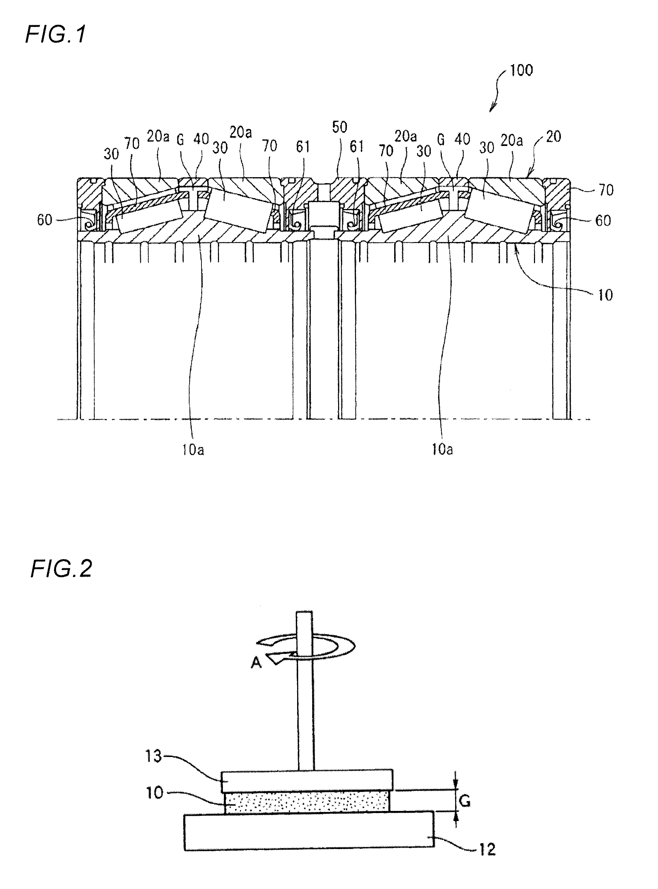

Fig. 1 shows a roll neck bearing for a rolling mill which is an example of a rolling bearing according an embodiment of the present invention.

As shown in Fig. 1, a roll neck bearing 100 for a rolling mill has a structure where four rows of rolling elements 30, 30, 30 and 30 are rollably provided in a circumferential direction between an inner ring 10 and an outer ring 20.

The inner ring 10 includes two double-row inner rings 10a and 10a, the outer ring 20 includes four single-row outer rings 20a, 20a, 20a and 20a, and filler pieces 40 and 50 are provided respectively between double-row inner rings 10a and 10a and between single-row outer rings 20a and 20a. The rolling elements 30 in each row are held equally spaced apart from one another by a cage 70.

Annular seal members 60 and 60 are fixed to both ends of the double-row outer ring 20 such that their seal lip parts are in contact with the outer peripheral surface of the double-row inner ring 10, and intermediate seal members 61 and 61 are fixed to the inner peripheral side at the abutting end where the inner rings 10 and 10 abut each other. Further, grease G for lubrication is enclosed in respective portions between the inner ring 10 and the outer ring 20 which are sealed by the annular seal members 60 and 60 and the intermediate seal members 61 and 61.

The grease G is described in detail below.

### [Base Oil]

For the base oil of the grease G, at least one kind of a mineral oil and a synthetic oil is used.

As the mineral oil, an oil obtained by refining a mineral oil by an appropriate combination of vacuum distillation, oil deasphalting, solvent extraction, hydrogenolysis, solvent dewaxing, sulfuric acid cleaning, white clay refining, hydrorefining, or the like may be used.

The synthetic oil may be a hydrocarbon-based oil, an aromatic oil, an ester-based oil, an ether-based oil, or the like. The hydrocarbon-based oil may be, for example, normal paraffin, isoparaffin, polybutene, polyisobutylene, a poly-α-olefin such as 1-decene oligomer and 1-decene triethylene oligomer, and a hydrogenation product thereof.

The aromatic oil may be, for example, an alkylbenzene such as monoalkylbenzene and dialkylbenzene, and an alkylnaphthalene such as monoalkylnaphthalene, dialkylnaphthalene and polyalkylnaphthalene.

The ester-based oil may be, for example, a diester oil such as dibutyl sebacate, di-2-ethylhexyl sebacate, dioctyl adipate, diisodecyl adipate, ditridecyl adipate, ditridecyl glutamate and methyl•acetylsinolate, an aromatic ester oil such as trioctyl trimellitate, tridecyl trimellitate and tetraoctyl pyromellitate, a polyol ester oil such as trimethylolpropane caprylate, trimethylolpropane pelargonate, pentaerythritol-2-ethylhexanoate and pentaerythritol pelargonate, and a complex ester oil that is an oligoester of a polyhydric alcohol with a mixed fatty acid of dibasic acid and monobasic acid.

The ether-based oil includes, for example, a polyglycol such as polyethylene glycol, polypropylene glycol, polyethylene glycol monoether and polypropylene glycol monoether, and a phenyl ether oil such as monoalkyl triphenyl ether, alkyl diphenyl ether, dialkyl diphenyl ether, pentaphenyl ether, tetraphenyl ether, monoalkyl tetraphenyl ether and dialkyl tetraphenyl ether.

Other synthetic lubricating base oils may be tricresyl phosphate, silicone oil, perfluoroalkyl ether oil, or the like.

The base oil has a kinematic viscosity of 200 to 400 mm²/s at 40°C. If the kinematic viscosity is less than 200 mm²/s at 40°C, when water gets mixed in, an oil film with a sufficient thickness can be hardly ensured. On the other hand, if the kinematic viscosity exceeds 400 mm²/s at 40°C, a large quantity of heat is generated due to high torque, and the fluidity also deteriorates. The kinematic viscosity is preferably from 250 to 400 mm²/s at 40°C.

These base oils may be used individually or as a mixture, and the base oil is adjusted to the above-described kinematic viscosity.

In the base oil, three kinds of antirust agents, i.e., a carboxylic acid-based antirust agent, a carboxylate-based antirust agent, and an amine-based antirust agent, are added as essential additives. Due to these three kinds of antirust agents, excellent water resistance can be obtained.

### [Carboxylic Acid-Based Antirust Agent]

The carboxylic acid-based antirust agent may be, in the case of a monocarboxylic acid, a linear fatty acid such as lauric acid and stearic acid, and a saturated carboxylic acid having a naphthene nucleus, and may be, in the case of a dicarboxylic acid, succinic acid, a succinic acid derivative such as alkylsuccinic acid, alkylsuccinic acid half ester, alkenylsuccinic acid, alkenylsuccinic acid half ester and succinic acid imide, a hydroxy fatty acid, a mercapto fatty acid, a sarcosine derivative, and an oxidized wax such as oxide of wax or petrolatum. Among others, a succinic acid half ester is preferred.

### [Carboxylate-Based Antirust Agent]

The carboxylate-based antirust may be metal salts of a fatty acid, a naphthenic acid, an abietic acid, a lanolin fatty acid, an alkenylsuccinic acid, an amino acid derivative, or the like. The metal element may be cobalt, manganese, zinc, aluminum, calcium, barium, lithium, magnesium, copper, or the like. Among others, zinc naphthenate is preferred.

### [Amine-Based Antirust Agent]

The amine-based antirust agent may be an alkoxyl phenylamine, an amine salt of a fatty acid, and a partial amide of a dibasic carboxylic acid. Among others, an amine salt of a fatty acid is preferred.

As for the added amounts of these three antirust agents, the added amount of each of the carboxylic acid-based antirust agent and the carboxylate-based antirust agent is from 0.1 to 5 mass% with respect to the total amount of grease. If the added amount is less than 0.1 mass%, a sufficient effect is not obtained, and even if these antirust agents are added in excess of 5 mass%, the effect is not improved. Considering these factors, the added amount of each of the carboxylic acid-based antirust agent and the carboxylate-based antirust agent is preferably from 0.5 to 3 mass%. The added amount of the amine-based antirust agent is from 0.1 to 3 mass% with respect to the total amount of grease. If the added amount is less than 0.1 mass%, a sufficient effect is not obtained, whereas even if this antirust agent is added in excess of 3 mass%, the effect is not improved, and moreover, the adsorption amount to the surface of a bearing member is excessively increased. This may cause a possibility that the production of an oxide film or the like derived from the enclosed grease composition is inhibited. Considering these factors, the added amount of the amine-based antirust agent is preferably from 0.5 to 3 mass%. In addition, for these reasons, the total added amount of three kinds of antirust agents is preferably from 1 to 6 mass% with respect to the total amount of grease.

### [Thickener]

The thickener is not particularly limited as long as it forms a gel structure and holds the base oil in the gel structure. For example, a thickener may be appropriately selected from metal soaps such as a metal soap composed of Li, Na, or the like and a complex metal soap selected from Li, Na, Ba, Ca, or the like, and non-soaps such as Benton, silica gel, a urea compound, a urea-urethane compound and a urethane compound. However, in consideration of heat resistance of the grease G, a lithium group of an N-alkyl-substituted monoamide acid, a lithium salt of a dibasic acid, a urea compound, a urea-urethane compound, a urethane compound, and a mixture thereof are preferred. The lithium group of an N-alkyl-substituted monoamide acid and the lithium salt of a dibasic acid are described in detail, for example, in JP-B-H7-30350.

The urea compound may be a diurea compound, a triurea compound, a tetraurea compound, a polyurea compound, a urea-urethane compound, a diurethane compound, and a mixture thereof. Among others, a lithium group of an N-alkyl-substituted monoamide acid, a lithium salt of a dibasic acid, a diurea compound, a urea-urethane compound, a diurethane compound, and a mixture thereof are more preferred.

The amount of the thickener is preferably from 5 to 40 mass% with respect to the total amount of the grease G. If the blending ratio of the thickener is less than 5 mass%, the state of the grease G can be hardly maintained, and if the blending amount exceeds 40 mass%, the grease G becomes too hard and cannot fully obtain the lubrication state, which is not preferred.

In addition to the antirust agent, various additives may be added, as needed, to the grease G, and among others, an antiwear agent is preferred.

### [Antiwear Agent]

As the antiwear agent, one of an organometallic compound such as zinc dithiocarbamate, triphenylphosphorothioate dialkyldithiocarbamic acid compound and dialkyldithiophosphoric acid compound, and a sulfur-phosphorus-based compound may be used. The metal species may be selected from Sb, Bi, Sn, Fe, Cu, Mo, and Zn.

The added amount of the antiwear agent is from 0.5 to 5.0 mass% with respect to the total amount of the grease G. If the added amount is less than 0.5 mass%, a sufficient effect is not obtained, and even if the antiwear agent is added in excess of 5.0 mass%, the effect is not improved. The added amount is preferably from 1.0 to 5.0 mass%.

Other various additives may also be mixed, if desired, so as to further improve various performances. For example, additives generally employed for the grease G, such as antioxidant, extreme pressure agent, oiliness improver and metal deactivator, may be used individually or in mixture of two or more thereof.

### [Other Additives]

The antioxidant may be, for example, an amine-based antioxidant, a phenol-based antioxidant, a sulfur-based antioxidant, and zinc dithiophosphate. Specific examples of the amine-based antioxidant may be phenyl-1-naphthylamine, phenyl-2-naphthylamine, diphenylamine, phenylenediamine, oleylamidoamine, and phenothiazine. Specific examples of the phenol-based antioxidant may be a hindered phenol such as p-tert-butyl-phenyl salicylate, 2,6-di-tert-butyl-p-phenylphenol, 2,2'-methylenebis(4-methyl-6-tert-octylphenol), 4,4'-butylidenebis-6-tert-butyl-m-cresol, tetrakis[methylene-3-(3',5'-di-tert-butyl-4'-hydroxyphenyl)propionate]methane, 1,3,5-trimethyl-2,4,6-tris(3,5-di-tert-butyl-4-hydroxybenzyl)benzene, n-octadecyl-β-(4'-hydroxy-3',5-di-tert-butylphenyl)propionate, 2-n-octyl-thio-4,6-di(4'-hydroxy-3',5'-di-tert-butyl)phenoxy-1,3,5-triazine, 4,4'-thiobis(6-tert-butyl-m-cresol) and 2-(2'-hydroxy-3'-tert-butyl-5'-methylphenyl)-5-chlorobenzotriazole.

The oiliness improver may be, for example, a fatty acid such as oleic acid and stearic acid, an alcohol such as lauryl alcohol and oleyl alcohol, an amine such as stearylamine and cetylamine, a phosphoric acid ester such as tricresyl phosphate, and an animal or vegetable oil.

Further, for example, an extreme pressure agent such as phosphorus-based compound, zinc dithiophosphate and organic molybdenum, and a metal deactivator such as benzotriazole, are used.

The added amount of other additives is not particularly limited as long as the object of the present invention is not lost, but the added amount is from 0.1 to 20 mass% based on the entirety of the grease G. If the added amount is less than 0.1 mass%, the addition effect of the additive is low, whereas even if the additive is added in excess of 20 mass%, the addition effect is not improved, and moreover, the amount of the base oil is relatively decreased, causing a possibility that the lubricity is disadvantageously reduced.

In order to ensure the fluidity and prevent smearing, the grease G is prepared to have a penetration of 300 to 400 and a yield stress of 150 Pa or less at 40°C. Further, an apparent viscosity is preferably 1.5 Pa•s or less at 40°C and a shear velocity of 5,000 s⁻¹.

### [Penetration]

If the penetration of the grease G is less than 300, the fluidity is inadequate and a sufficient effect of preventing smearing is not obtained. On the other hand, if the penetration exceeds 400, grease leakage is likely to occur, and the lubrication life is shortened. Therefore, the penetration is preferably from 300 to 400. The penetration can be adjusted by varying, for example, the kind or amount of the thickener, or the viscosity of the base oil.

### [Yield Stress]

The grease G is prepared to have a yield stress of 150 Pa or less at 40°C, so that the fluidity can be ensured without losing the lubricity. The yield stress is preferably 120 Pa or less at 40°C.

### [Apparent Viscosity]

From the standpoint of further increasing the fluidity, the apparent viscosity of the grease G is preferably adjusted to 1.5 Pa•s or less, more preferably 1.0 Pa•s or less at 40°C and a shear velocity of 5,000 s⁻¹.

The yield stress and the apparent viscosity can be adjusted, for example, by varying the kind of the thickener, the reaction temperature, the cooling temperature, or the dispersion state.

Such grease G is not particularly limited in its production method but is obtained by reacting the thickener in the base oil. The carboxylic acid-based antirust additive, carboxylate-based antirust additive and amine-based antirust agent are preferably blended each in a predetermined amount to the obtained grease G. However, the antirust agents added should be uniformly dispersed by fully stirring the mixture by means of a kneader, a roll mill, or the like. At the time of this processing, it is also effective to heat the mixture. In the production method above, other additives such as antioxidant are preferably added simultaneously with the antirust agents in view of the process.

As apparent from the following Examples, the rolling bearing 100 for a steel rolling mill, in which such grease G is enclosed, can obtain excellent antirust performance, flaking prevention effect, smearing prevention effect and grease leakage prevention effect to have excellent reliability and a long life.

### Examples

The present invention is further described below by referring to Examples and Comparative Examples, but the present invention is not limited thereto by any means.

### (Example 1)

As shown in Table 1 below, a diurea compound was blended as a thickener with a base oil (kinematic viscosity: 350 mm²/s) composed of a mineral oil and after zinc naphthenate (carboxylate-based antirust agent), a succinic acid half ester (carboxylic acid-based antirust agent) and an amine salt of a fatty acid (amine-based antirust agent) were added thereto as antirust agents in a total ratio of 4 mass%, the penetration was adjusted to 340 to obtain a test grease.

The test grease was measured for the apparent viscosity at 40°C by a rheometer. Fig. 2 is a schematic view (cross-sectional view) showing the configuration of a measurement part of the rheometer, where a disc-shaped measurement plate 13 (parallel plate) is disposed through a gap G above a flat plate stage 12 surrounded by a heat-insulating wall (not shown) and a flat lower surface of the measurement plate 13 is parallel to the stage 12. The gap G formed between the measurement plate 13 and the stage 12 is filled with grease. The apparent viscosity is measured by applying a shear velocity to the grease by rotating the measurement plate 13 in one direction (arrow A direction) while controlling the temperature of the grease by a temperature control unit embedded into the stage 12. The diameter of the measurement plate 13 is 20 mm, and the gap G is 0.1 mm. As the measurement plate 13, a cone plate may be used in place of the parallel plate. In addition, if an oscillation with appropriate frequency is applied, the viscoelasticity of the grease can also be measured. The apparent viscosity was measured here at 40°C and a shear velocity of 5,000 s⁻¹.

The yield stress at 40°C was measured according to the stress set at the time of measurement. The measurement of the yield stress at 40°C was performed using the rheometer. In the same way as in the measurement of the apparent viscosity, the gap between the measurement plate and the stage was filled with the grease composition, the shear stress applied on the measurement plate 13 was gradually increased while controlling the temperature, and the shear stress when the calculated viscosity started evenly decreasing was defined as the yield stress.

In a tapered roller bearing "HR30205 (inner diameter: 25 mm, outer diameter: 52 mm, width: 16.25 mm)" manufactured by NSK Ltd., which is one of the roller bearings for a steel rolling mill, the test grease and 1 mass% of water were enclosed, and the bearing was continuously rotated for 200 hours under the conditions of 120°C, a radial load of 98 N, an axial load of 1,470 N and a rotation speed of 3,500 min⁻¹ to observe whether rust is generated (antirust test), whether flaking is generated (flaking test), and whether smearing occurs (smearing test).

Further, the amount of grease leakage (bearing leak test) was determined from the difference in weight between before and after rotation.

The measurement results and test results above are shown in Table 1. In Example 1 of the present invention, rust and flaking as well as smearing were not generated, the grease leakage was suppressed, and good characteristics were obtained.

### (Example 2)

A test grease was obtained in the same manner as in Example 1 except that as shown in Table 1 below, a poly-α-olefin (kinematic viscosity: 200 mm²/s) was used as the base oil, the added amount of the antirust agent was changed to 2 mass%, and the penetration, apparent viscosity and yield stress were adjusted to 320, 0.68 Pa•s and 80 Pa, respectively.

This test grease was enclosed in the same bearing as in Example 1, and various measurements and tests were performed under the same conditions. As a result, as shown in Table 1, also in Example 2 of the present invention, rust and flaking as well as smearing were not generated, the grease leakage was suppressed, and good characteristics were obtained.

### (Example 3)

A test grease was obtained in the same manner as in Example 1 except that as shown in Table 1 below, a polyol ester (kinematic viscosity: 300 mm²/s) was used as the base oil, the added amount of the antirust agent was changed to 3 mass%, the penetration was adjusted to 300, and the apparent viscosity and yield stress were set as in Table 1.

This test grease was enclosed in the same bearing as in Example 1, and various measurements and tests were performed under the same conditions. As a result, as shown in Table 1, also in Example 3 of the present invention, rust and flaking as well as smearing were not generated, the grease leakage was suppressed, and good characteristics were obtained.

### (Example 4)

A test grease was obtained in the same manner as in Example 1 except that as shown in Table 1 below, a lithium soap was used as the thickener, the added amount of the antirust agent was changed to 1.5 mass%, the penetration was adjusted to 320, and the apparent viscosity and yield stress were set as in Table 1.

This test grease was enclosed in the same bearing as in Example 1, and various measurements and tests were performed under the same conditions. As a result, as shown in Table 1, also in Example 4 of the present invention, rust and flaking as well as smearing were not generated, the grease leakage was suppressed, and good characteristics were obtained.

### (Example 5)

A test grease was obtained in the same manner as in Example 4 except that as shown in Table 1 below, the kinematic viscosity of the base oil was changed to 400 mm²/s, the added amount of the antirust agent was changed to 4 mass%, the penetration was adjusted to 340, and the apparent viscosity and yield stress were set as in Table 1.

This test grease was enclosed in the same bearing as in Example 1, and various measurements and tests were performed under the same conditions. As a result, as shown in Table 1, also in Example 5 of the present invention, rust and flaking as well as smearing were not generated, the grease leakage was suppressed, and good characteristics were obtained.

### (Example 6)

A test grease was obtained in the same manner as in Example 1 except that as shown in Table 1 below, the kinematic viscosity of the base oil was changed to 250 mm²/s and the apparent viscosity and yield stress were set as in Table 1.

This test grease was enclosed in the same bearing as in Example 1, and various measurements and tests were performed under the same conditions. As a result, as shown in Table 1, also in Example 6 of the present invention, rust and flaking as well as smearing were not generated, the grease leakage was suppressed, and good characteristics were obtained.

### (Example 7)

A test grease was obtained in the same manner as in Example 1 except that as shown in Table 1 below, the kinematic viscosity of the base oil was changed to 400 mm²/s, the penetration was adjusted to 400, and the apparent viscosity and yield stress were set as in Table 1.

This test grease was enclosed in the same bearing as in Example 1, and various measurements and tests were performed under the same conditions. As a result, as shown in Table 1, also in Example 7 of the present invention, rust and flaking as well as smearing were not generated, the grease leakage was suppressed, and good characteristics were obtained.

### (Example 8)

A test grease was obtained in the same manner as in Example 1 except that as shown in Table 1 below, a lithium complex soap was used as the thickener, the kinematic viscosity of the base oil was changed to 400 mm²/s, the penetration was adjusted to 300, and the apparent viscosity and yield stress were set as in Table 1.

This test grease was enclosed in the same bearing as in Example 1, and various measurements and tests were performed under the same conditions. As a result, as shown in Table 1, also in Example 8 of the present invention, rust and flaking as well as smearing were not generated, the grease leakage was suppressed, and good characteristics were obtained.

### (Example 9)

A test grease was obtained in the same manner as in Example 1 except that as shown in Table 1 below, the penetration was adjusted to 300 and the apparent viscosity and yield stress were set as in Table 1.

This test grease was enclosed in the same bearing as in Example 1, and various measurements and tests were performed under the same conditions. As a result, as shown in Table 1, also in Example 9 of the present invention, rust and flaking as well as smearing were not generated, the grease leakage was suppressed, and good characteristics were obtained.

### (Example 10)

A test grease was obtained in the same manner as in Example 1 except that as shown in Table 1 below, a lithium soap was used as the thickener, the kinematic viscosity of the base oil was changed to 400 mm²/s, the penetration was adjusted to 320, and the apparent viscosity and yield stress were set as in Table 1.

This test grease was enclosed in the same bearing as in Example 1, and various measurements and tests were performed under the same conditions. As a result, as shown in Table 1, also in Example 10 of the present invention, rust and flaking as well as smearing were not generated, the grease leakage was suppressed, and good characteristics were obtained.

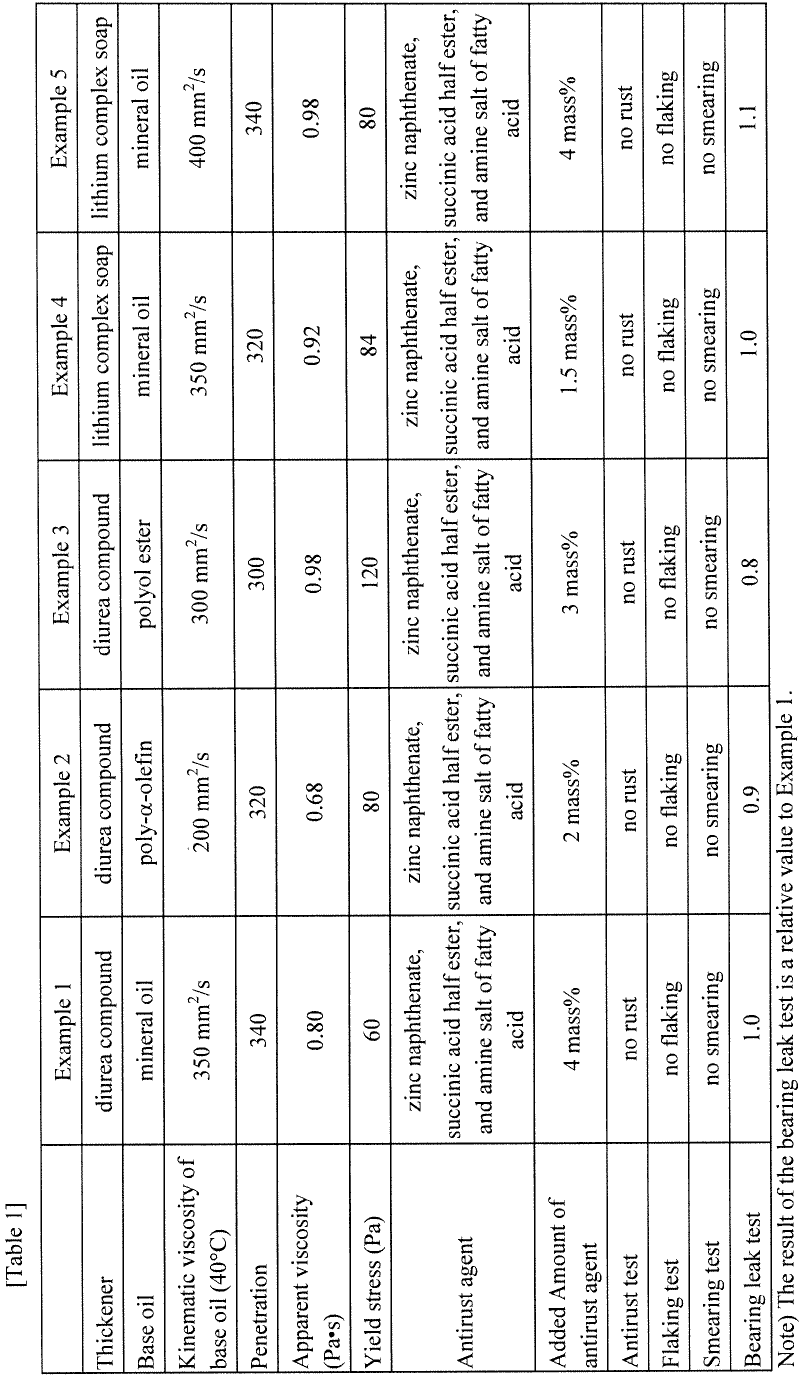

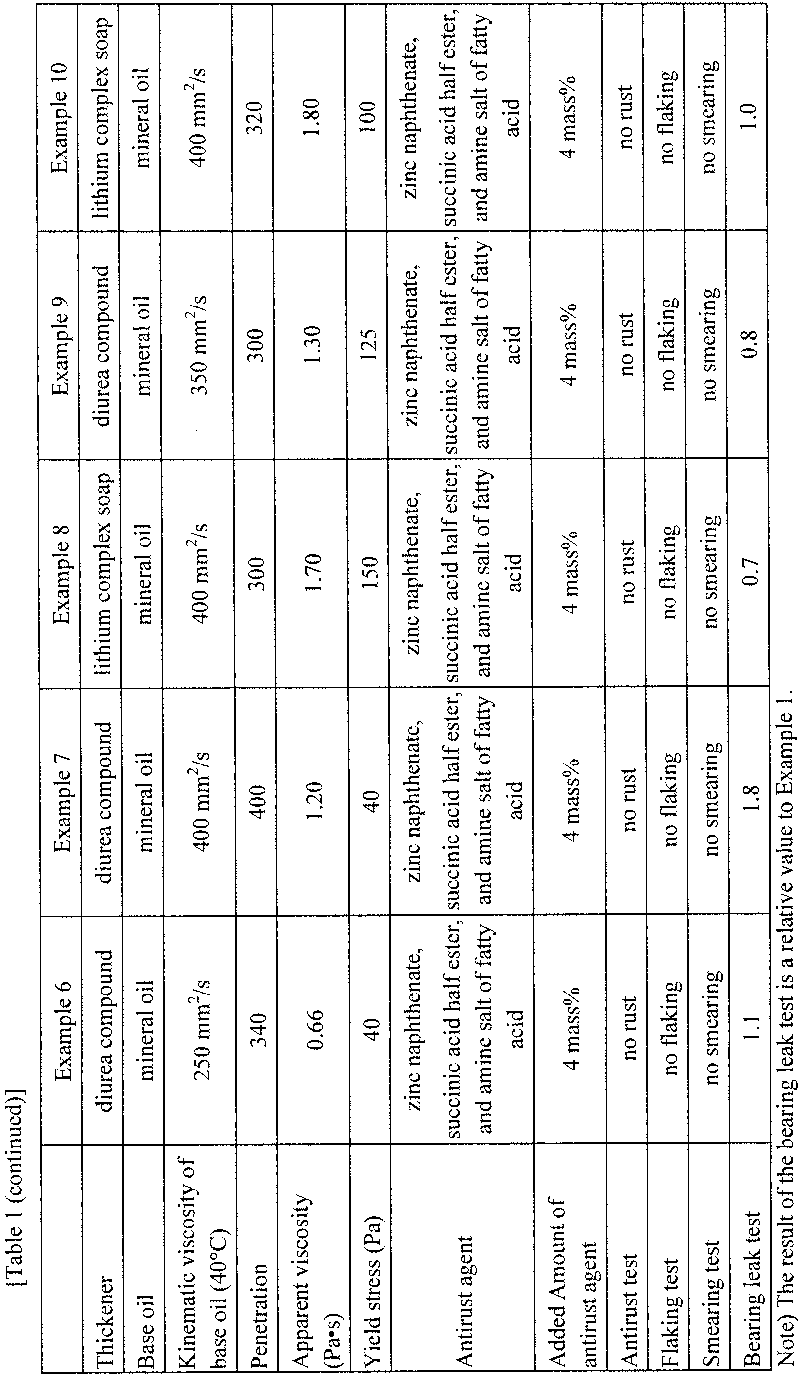

### (Comparative Example 1)

A test grease was obtained in the same manner as in Example 1 except that as shown in Table 2 below, 2 mass% of barium sulfonate was added as the antirust agent.

This test grease was enclosed in the same bearing as in Example 1, and various measurements and tests were performed under the same conditions. As a result, as shown in Table 2, the results of antirust test, smearing test and bearing leak test were good, but flaking was generated.

### (Comparative Example 2)

A test grease was obtained in the same manner as in Example 2 except that as shown in Table 2 below, a poly-α-olefin (kinematic viscosity: 80 mm²/s) was used as the base oil and the antirust agent was not added at all.

This test grease was enclosed in the same bearing as in Example 1, and various measurements and tests were performed under the same conditions. As a result, as shown in Table 2, the results of smearing test and bearing leak test were good, but rust and flaking were generated.

### (Comparative Example 3)

A test grease was obtained in the same manner as in Example 1 except that as shown in Table 2 below, only zinc naphthenate (carboxylate-based antirust agent) and an amine salt of a fatty acid (amine-based antirust agent) were added as antirust agents in an amount of 2 mass% and the penetration was adjusted to 250.

This test grease was enclosed in the same bearing as in Example 1, and various measurements and tests were performed under the same conditions. As a result, as shown in Table 2, the results of antirust test and bearing leak test were good, but smearing and flaking were generated.

### (Comparative Example 4)

A test grease was obtained in the same manner as in Example 1 except that as shown in Table 2 below, only zinc naphthenate (carboxylate-based antirust agent) and a succinic acid half ester (carboxylic acid-based antirust agent) were added as antirust agents in an amount of 2 mass% and the penetration was adjusted to 250.

This test grease was enclosed in the same bearing as in Example 1, and various measurements and tests were performed under the same conditions. As a result, as shown in Table 2, the results of antirust test and bearing leak test were good, but smearing and flaking were generated.

### (Comparative Example 5)

A test grease was obtained in the same manner as in Example 1 except that as shown in Table 2 below, a lithium soap was used as the thickener, the penetration was adjusted to 250, and the apparent viscosity and yield stress were set as in Table 2.

This test grease was enclosed in the same bearing as in Example 1, and various measurements and tests were performed under the same conditions. As a result, as shown in Table 2, the results of antirust test, flaking test and bearing leak test were good, but smearing was generated.

### (Comparative Example 6)

A test grease was obtained in the same manner as in Example 1 except that as shown in Table 2 below, the kinematic viscosity of the base oil was changed to 200 mm²/s, the penetration was adjusted to 450, and the apparent viscosity and yield stress were set as in Table 2.

This test grease was enclosed in the same bearing as in Example 1, and various measurements and tests were performed under the same conditions. As a result, as shown in Table 2, the results of antirust test and smearing test were good, but flaking was generated and the amount of grease leakage was large.

### (Comparative Example 7)

A test grease was obtained in the same manner as in Example 1 except that as shown in Table 2 below, the kinematic viscosity of the base oil was changed to 800 mm²/s, the penetration was adjusted to 300, and the apparent viscosity and yield stress were set as in Table 2.

This test grease was enclosed in the same bearing as in Example 1, and various measurements and tests were performed under the same conditions. As a result, as shown in Table 2, the results of antirust test and bearing leak test were good, but smearing and flaking were generated.

### (Comparative Example 8)

A test grease was obtained by using, as shown in Table 2 below, a mineral oil (kinematic viscosity: 170 mm²/s) as the base oil and a lithium soap as the thickener, not adding the antirust agent at all, and adjusting the penetration to 300.

This test grease was enclosed in the same bearing as in Example 1, and various measurements and tests were performed under the same conditions. As a result, as shown in Table 2, the results of smearing test and bearing leak test were good, but rust and flaking were generated.

### (Comparative Example 9)

A test grease was obtained by using, as shown in Table 2 below, a mineral oil (kinematic viscosity: 130 mm²/s) as the base oil and a calcium soap as the thickener, not adding the antirust agent at all, and adjusting the penetration to 280.

This test grease was enclosed in the same bearing as in Example 1, and various measurements and tests were performed under the same conditions. As a result, as shown in Table 2, the results of antirust test, smearing test and bearing leak test were good, but flaking was generated.

### (Comparative Example 10)

A test grease having the same composition as in Example 1 was prepared except that a base oil was used, the penetration was adjusted to 300 and the apparent viscosity and yield stress were set as in Table 2. This test grease was enclosed in the same bearing as in Example 1, and various measurements and tests were performed under the same conditions.

As a result, as shown in Table 2, the results of antirust test, flaking test and bearing leak test were good, but smearing was generated.

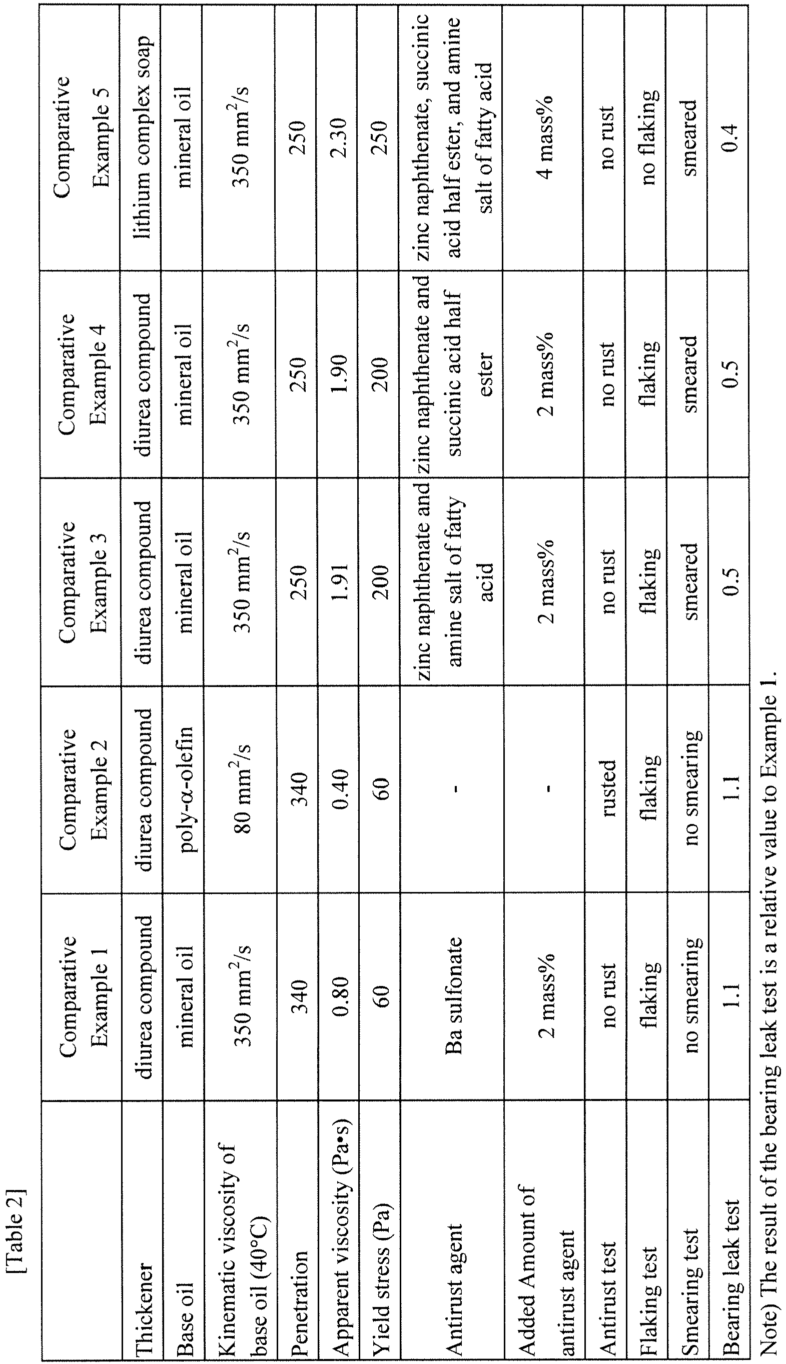

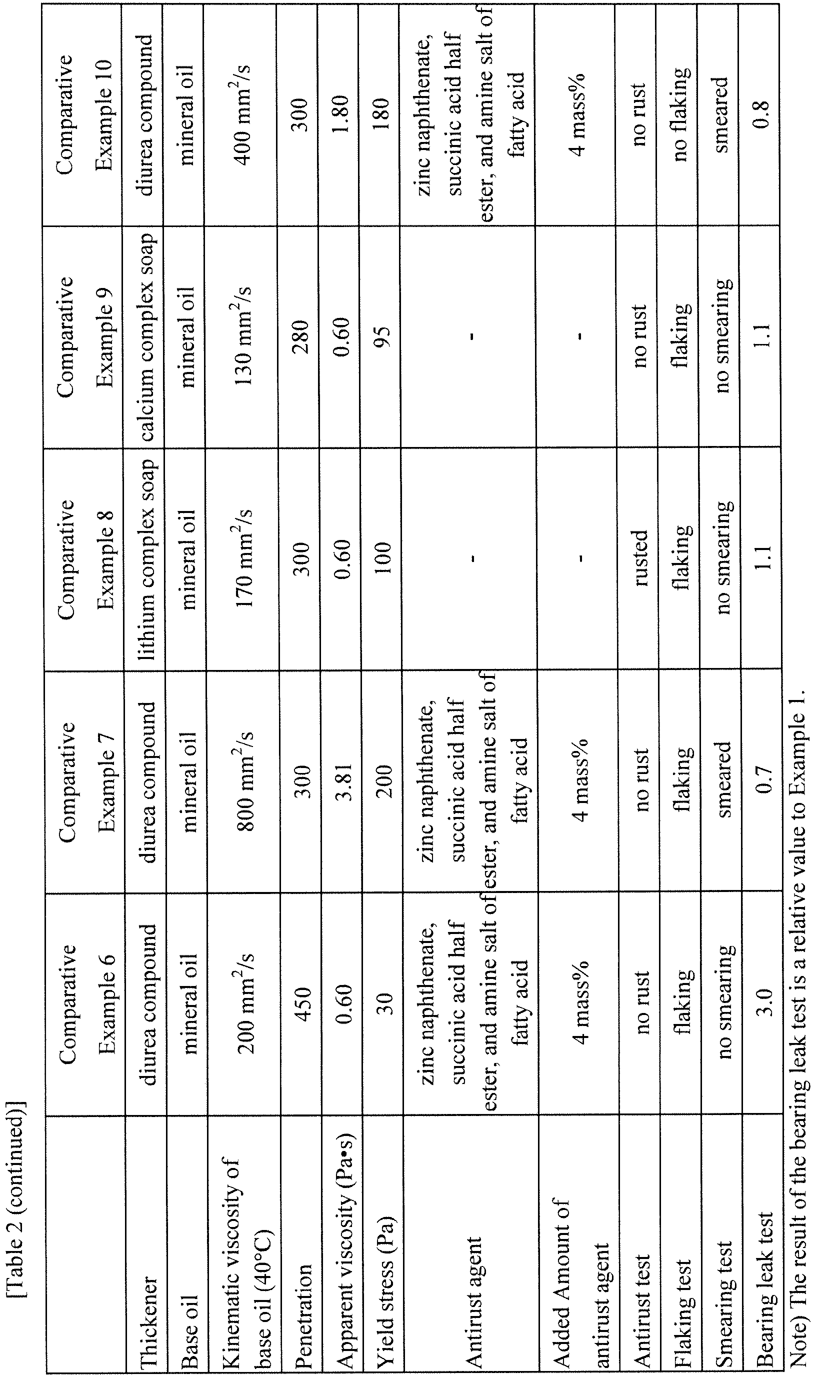

As seen from these Examples and Comparative Examples, enclosing the grease according to the present invention in a bearing makes it possible to obtain a rolling bearing in which the water resistance is greatly improved, the antirust performance and flaking prevention effect are very excellent, smearing is not caused, the grease leakage is reduced, the life is long, and the durability is excellent.

### Description of Reference Numerals and Signs

- 100:: Rolling bearing for steel rolling mill (roll neck bearing for rolling mill)
- 10:: Inner ring
- 10a:: Double-row inner ring
- 20:: Outer ring
- 20a:: Single-row outer ring
- 30:: Rolling element
- 40, 50:: Filler piece
- 60:: Annular seal member
- 61:: Intermediate seal member
- 70:: Cage
- G:: Grease

## Claims

1. A grease composition for a rolling bearing, the grease composition obtained by adding three kinds of antirust agents which are a carboxylic acid-based antirust agent, a carboxylate-based antirust agent and an amine-based antirust agent to a base oil which contains at least one kind of a mineral oil and a synthetic oil and has a kinematic viscosity of 200 to 400 mm²/s at 40°C, the grease composition having a penetration of 300 to 400 and a yield stress of 150 Pa or less at 40°C.

2. The grease composition for the rolling bearing according to claim 1 having an apparent viscosity of 1.5 Pa•s or less at 40°C and a shear velocity of 5,000 s⁻¹.

3. A rolling bearing comprising a plurality of rolling elements rollably provided between an inner ring and an outer ring and having enclosed therein the grease composition according to claim 1 or 2.
